# EUROPÄISCHE PATENTSCHRIFT

(11) **EP 1 384 418 B1**
(45) Veröffentlichungstag und Bekanntmachung des Hinweises auf die Patenterteilung: **28.03.2007**
(21) Anmeldenummer: 03405540.0
(22) Anmeldetag: 15.07.2003
(51) Int. Cl.: A46B 9/04

(54) **Bürste zur zahnärztlichen Behandlung**
Brush for dental treatment
Brosse pour le traitement dentaire

(30) Priorität: 23.07.2002 CH 13022002
(43) Veröffentlichungstag der Anmeldung: 28.01.2004
(73) Patentinhaber: KerrHawe S.A., 6934 Bioggio (CH)
(72) Erfinder: Zimmer, Stefan, 14167 Berlin (DE)
(74) Vertreter: Seehof, Michel

(56) Entgegenhaltungen:
- EP-A- 0 655 209
- DE-A- 3 607 200
- US-A- 5 655 249
- US-A- 6 041 468
- US-A1- 2001 007 161
- US-B1- 6 237 178

## Beschreibung

Die vorliegende Erfindung bezieht sich auf eine Bürste mit einem Borstenfeld zur Verwendung an einem zahnärztlichen Winkelstück oder einer elektrischen Zahnbürste. Es sind eine grosse Vielzahl von rotierenden Bürsten bekannt, die zur Finierung, Politur und Reinigung von Zähnen und/oder Füllungen eingesetzt werden. Das aus einzelnen Borsten bestehende Borstenfeld weist dabei verschiedene Formen auf und kann beispielsweise voll oder nur kranzartig angeordnete Borsten aufweisen.

In letzter Zeit haben sich Bürsten bewährt, die an Stelle von rotierenden Polierkörpern eingesetzt werden, um einerseits die Anzahl Schritte nach dem Finieren mit Diamant zu reduzieren und andererseits, um möglichst mit einem Polierkörper alle Zahnflächen unabhängig von deren Geometrie oder Zugänglichkeit effizient zu bearbeiten.

Als Beispiele für kranzartig angeordnete Borsten seien die US-A-4 020 522 und US-A-4 739 532 genannt, wobei die Borsten im Borstenfeld von innen nach aussen abnehmende Längen aufweisen. Solche Bürsten werden hauptsächlich zur Desinfektion von parodontalen Taschen verwendet, wobei die Borsten relativ weich sein müssen.

Es sind auch Bürsten mit Borstenfelder bekannt, die eben geschnitten sind, d.h., dass alle Borsten aussen bündig geschnitten sind. Dies gilt auch für kranzartig angeordnete Borsten, die aussen bündig sind, wie sie der Anmelder vertreibt.

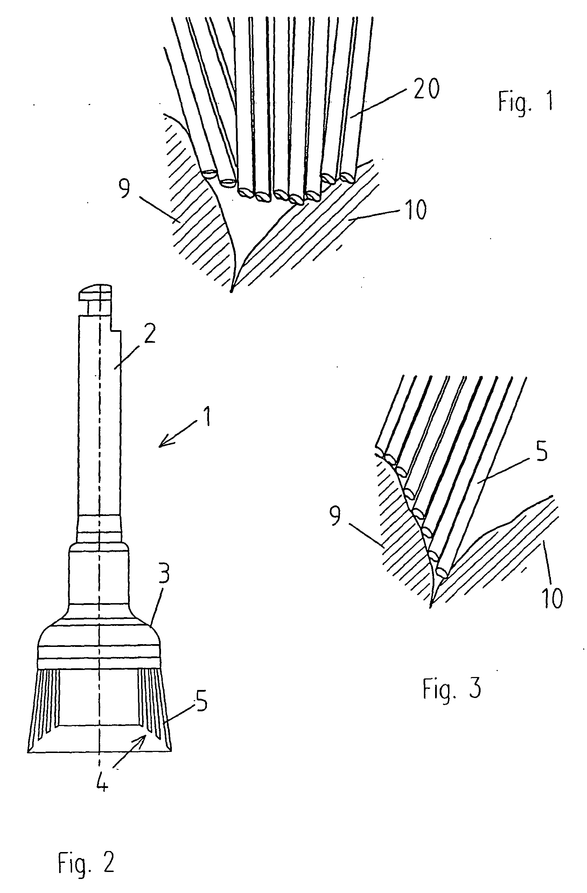

Solche Anordnungen von Borsten haben den Nachteil, dass sie nicht gut in Zwischenräume eindringen, und dass damit besonders enge Spalten oder Fissuren nicht oder nicht vollständig zu finieren, polieren, schleifen oder reinigen sind, siehe Figur 1. Falls die Borsten dicht stehen, führen diese bei einer solchen Anordnung zu einem Verkeilungseffekt in den spitz zulaufenden Zahnzwischenräumen und Fissuren der Kauflächen.

Aus der WO 99/45819 ist eine Zahnbürste für den täglichen Gebrauch bekannt, die in Querrichtung gesehen ein Borstenfeld mit Borstenbündeln aufweist, die konkav angeordnet sind. Dies hat u.a. den Effekt, dass eingelegte Zahnpasta dort besser hält.

Aus der DE-A-36 07 200 ist eine Zahnbürste mit kreisförmigem Bürstenkopf bekannt. Die Oberfläche des Borstenfeldes weist eine geringfügig konkave Oberfläche auf. Dadurch wird die Tendenz, von einer Zahnoberfläche abzugleiten, reduziert, wenn die empfohlene kreisförmige Putzbewegung beim manuellen Putzen der Zähne angewendet wird.

Aus der US-6,237,178 ist ein, Bürstenkopf für motorischen Antrieb bekannt, der aus einem kreisförmigen Borstenfeld rund einem kleineren, distal angeordneten Interdental-Borstenfeld besteht. Die Oberfläche des kreisförmigen Borstenfelds ist dabei V-förmig ausgebildet. Durch die V-Form wird eine Anpassung an die gekrümmte Wand der Zähne bei horizontaler Haltung des Bürstenhalters angestrebt.

Die US-5, 555, 249 schlägt für eine Zahnbürste mit rechteckigem Bürstenkopf und -feld vor, die Feldoberfläche in Richtung der Bürste gekrümmt auszuführen. Damit wird, ähnlich wie in der US-6,237,178, eine Anpassung an die Form der Zahnflanken, aber auch an die Krümmung der Zahnreihe erzielt, da die Bürste eine Länge aufweist, die ein Mehrfaches eines Zahndurchmessers ist. Durch die weiter vorstehenden distalen Borsten ist auch eine bessere Reinigung der Zahnzwischenräume und der Zahnrückseiten möglich.

Es ist von diesem Stand der Technik ausgehend Aufgabe der vorliegenden Erfindung, eine Bürste zur Verwendung an einem zahnärztlichen Winkelstück oder an einer elektrischen Zahnbürste anzugeben, die eine wirkungsvollere Finierung, Politur und Reinigung von Zahnzwischenräumen und Fissuren an der Kaufläche der Zähne sowie Füllungen ermöglicht. Diese Aufgabe wird mit der Bürste gemäss Patentanspruch 1 gelöst.

Die Erfindung wird im Folgenden anhand von Zeichnungen von Ausführungsbeispielen näher erläutert.
- Fig. 1: zeigt in vergrösserter Sicht eine Bürste gemäss Stand der Technik an einem Zahnzwischenraum;
- Fig. 2: zeigt in Seitenansicht und teilweise aufgeschnitten ein erstes Ausführungsbeispiel einer erfindungsgemässen Bürste;
- Fig. 3: zeigt in vergrösserter Sicht eine Bürste gemäss Erfindung in der Stellung von Figur 1,
- Fig. 4: zeigt die Bürste von Fig. 2, teilweise geschnitten, an einem Zahnzwischenraum; und
- Fig. 5: zeigt die Bürste von Fig. 4 an einem Zahn.

In Figur 1 ist dargestellt, dass die Borsten 20 nicht ganz in den Zwischenraum zwischen den Zähnen 9 und 10 oder in eine Fissur gelangen können. Im Gegensatz dazu können die Borsten 5 oder 7 der erfindungsgemässen Bürste, wie dies aus Figur 3 hervorgeht, tief in den Zwischenraum oder Fissur eindringen.

Die erfindungsgemässe Bürste 1 nach Fig. 2 besteht im Wesentlichen aus dem Befestigungsteil 2 zur Befestigung an einem zahnärztlichen Winkelstück und einem Bürstenkopf 3 mit dem Borstenfeld 4, das aus den einzelnen Borsten 5 besteht. Aus den Fig. 2, 3 - 5 ist ersichtlich, dass die Borsten bei diesem Ausführungsbeispiel kranzförmig angelegt sind, und dass die Länge der Borsten, bezogen auf den Aussendurchmesser des Borstenfeldes, zur Mitte hin eine abnehmende Länge aufweisen, d.h. eine konkave Form aufweisen.

Dabei kann die Form nach innen linear abnehmend sein oder gewölbt, d.h. sphärisch oder in einer anderen geometrischen Form abnehmend. Die einzelnen Borsten 5, die gerundet sein können, können je nach Verwendungszweck Schleifkörper enthalten, z. B. aus Aluminiumoxyd, Siliziumkarbid, Diamant oder Kalziumkarbonat oder zusammen mit einer Prophylaxepaste verwendet werden. Ausserdem können die Borsten aus unterschiedlichen, an sich bekannten Materialien gefertigt sein, wobei sich das verwendete Material nach dem Anwendungszweck richtet, d.h., ob eine solche rotierende Bürste 5 für die Prophylaxe verwendet wird oder für das Finieren, Polieren oder Schleifen von Zähnen oder von Zahnrestaurationen oder für andere Anwendungszwecke.

Die konkave Form der Borsten bringt mit sich, dass die Bürste nicht so aggressiv auf die Weichteile wie das Zahnfleisch wirkt und sich besser an die Zahnoberfläche fügt. Zudem nimmt gerade wegen der Rotationsbewegung der Bürste die Effizienz zu, da mehrere Borsten flächenförmig im Einsatz sind

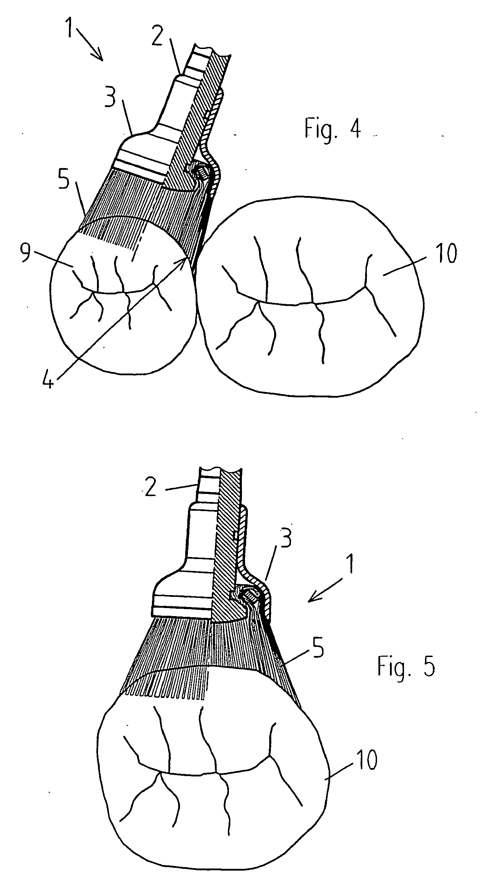

Intensive Versuche haben ergeben, dass die Anwendung von Bürsten mit einem nach innen gerichteten hohlen Borstenfeld wie oben beschrieben besonders gute Erfolge bei der Finierung, Politur und Reinigung von Fissuren und engen Zahnzwischenräumen ergeben, wobei dies insbesondere aus den Figuren 3 und 4 ersichtlich ist, wo, im Gegensatz zu einer Bürste gemäss Stand der Technik, siehe Figur 1, die längeren Aussenborsten in einen Zwischenraum zwischen den Zähnen 9 und 10 oder in eine Fissur dringen können, ohne sich dort festzuklemmen.

Ausserdem geht aus Fig. 5 hervor, dass die konkave Form des Borstenfeldes besser an die konvexe Zahnoberfläche angepasst ist, wodurch ein besserer Finierungs-, Reinigungs- oder Poliereffekt erzielt wird.

Die Bürsten können, zusammen mit den auf dem Markt erhältlichen Polierpasten, auch für den professionellen Prophylaxeeinsatz verwendet werden und ähnliche Vorteile bringen wie oben beschrieben. Daraus ergibt sich eine Vereinfachung der Prozedur, indem man nur mit einer Bürste auskommt und die spitze Form wie den kleinen Kelch weglassen kann. Aus der kranzförmigen konkaven Form resultiert auch eine Erhöhung der Umlaufgeschwindigkeit, da der Kranz vom Rotationszentrum entfernt ist. Dies ergibt eine höhere Effizienz. Die erfindungsgemässe Bürste kann auch für Apparate für rotierende Zahnbürsten, z. B. für den Hausgebrauch, eingesetzt werden.

## Patentansprüche

1. Bürste zur Verwendung an einem zahnärztlichen Winkelstück oder an einer elektrischen Zahnbürste, mit einem Borstenfeld, wobei die Borsten (5, 7) des Borstenfeldes (4, 8), bezogen auf dessen Aussendurchmesser, eine von Aussen nach Innen abnehmende Länge aufweisen **dadurch gekennzeichnet, dass** die Borsten (5) in einem Kranz (4) angeordnet sind.

2. Bürste nach Anspruch 1, **dadurch gekennzeichnet, dass** die Borsten (5, 7) aus thermisch widerstandsfähigem Kunststoff wie Aramidfasern, Kevlarfasern oder PEEK gefertigt sind.

3. Bürste nach einem der Ansprüche 1 bis 2, **dadurch gekennzeichnet, dass** die Borsten (5, 7) Abrasivstoffe aufweisen.

4. Verwendung einer Bürste nach einem der Ansprüche 1 bis 3 für das Finieren, Polieren oder Reinigen der Zahnoberfläche und/oder einer Füllung.

5. Verwendung nach Anspruch 4 auf unterschiedlichen Füllungsmaterialien.

6. Verwendung einer Bürste nach einem der Ansprüche 1 bis 3, **dadurch gekennzeichnet, dass** die Bürste Polyamidfasern enthält und Prophylaxepaste verwendet wird.

## Claims

1. Brush for use on a dentist's anglepiece or on an electric toothbrush, comprising a bristle field, the bristles (5, 7) of the bristle field (4, 8), relative to its external diameter, having a length that decreases from the exterior toward the interior, **characterised in that** the bristles (5) are arranged in a crown (4).

2. Brush according to claim 1, **characterised in that** the bristles (5, 7) are made of a thermally resistant synthetic material such as aramide fibres, Kevlar fibres, or PEEK.

3. Brush according to one of claims 1 to 2, **characterised in that** the bristles (5, 7) comprise abrasive materials.

4. Use of a brush according to one of claims 1 to 3 for finishing, polishing, or cleaning the tooth surface and/or a filling.

5. Use according to claim 4 on different filling materials.

6. Use of a brush according to one of claims 1 to 3, **characterised in that** the brush comprises polyamide fibres and a prophylactic paste is used.

## Revendications

1. Brosse pour utilisation avec un contre-angle dentaire ou avec une brosse à dents électrique, comprenant un champ de soies, les soies (5, 7) du champ de soies (4, 8) présentant, en se référant à son diamètre extérieur, une longueur décroissante de l'extérieur vers l'intérieur, **caractérisée en ce que** les soies (5) sont agencées en couronne (4).

2. Brosse selon la revendication 1, **caractérisée en ce que** les soies (5, 7) sont fabriquées à partir d'un matériau synthétique résistant à la chaleur tel que les fibres aramide, les fibres de Kevlar ou le PEEK.

3. Brosse selon l'une des revendications 1 à 2, **caractérisée en ce que** les soies (5, 7) comprennent des matières abrasives.

4. Utilisation d'une brosse selon l'une des revendications 1 à 3 pour la finition, le polissage ou le nettoyage de la surface dentaire et/ou d'une obturation.

5. Utilisation selon la revendication 4 sur différents matériaux d'obturation.

6. Utilisation d'une brosse selon l'une des revendications 1 à 3, **caractérisée en ce que** la brosse comprend des fibres de polyamide et qu'une pâte prophylactique est utilisée.
